# EUROPEAN PATENT SPECIFICATION

(11) **EP 1 677 567 B1**
(45) Date of publication and mention of the grant of the patent: **26.10.2011**
(21) Application number: 05028429.8
(22) Date of filing: 23.12.2005
(51) Int. Cl.: H04Q 11/00, H04L 12/26, H04L 12/24

(54) **Optical network element with remote access capability**
Optisches Netzelement mit Fernzugriffsfähigkeit
Elément de réseau optique présentant des capacités d'accès à distance

(30) Priority: 30.12.2004 US 26196
(43) Date of publication of application: 05.07.2006
(73) Proprietor: Alcatel Lucent, 75008 Paris (FR)
(72) Inventor: Thinguldstad, Arthur Martin, Raleigh NC 27615 (US)
(74) Representative: Schmidt, Werner Karl

(56) References cited:
- EP-A- 0 648 061
- WO-A-2005/115043
- PESAVENTO G: "ETHERNET PASSIVE OPTICAL NETWORK (EPON) ARCHITECTURE FOR BROADBAND ACCESS" OPTICAL NETWORKS MAGAZINE, SPIE, BELLINGHAM, WA, US, vol. 4, no. 1, January 2003 (2003-01), pages 107-113, XP001162954 ISSN: 1388-6916
- EUIHYUN PAIK ET AL: "Design and implementation of web-based EPON EMS system" ADVANCED COMMUNICATION TECHNOLOGY, 2004. THE 6TH INTERNATIONAL CONFERENCE ON PHOENIX PARK, KOREA FEB. 9-11, 2004, PISCATAWAY, NJ, USA,IEEE, vol. 2, 9 February 2004 (2004-02-09), pages 786-790, XP010701309 ISBN: 89-5519-119-7
- DU CHAFFAUT G ET AL: "Management of an ATM PON network: an example of experimentation" OPTICAL/HYBRID ACCESS NETWORKS, 1993., 5TH CONFERENCE ON MONTREAL, QUE., CANADA 7-9 SEPT. 1993, NEW YORK, NY, USA,IEEE, US, 7 September 1993 (1993-09-07), pages 501-1, XP010224085 ISBN: 0-7803-1249-X

## Description

### FIELD OF THE DISCLOSURE

The disclosures made herein relate generally to Passive Optical Network systems and more particularly to facilitating remote access to Optical Network Terminal diagnostic functionalities.

### BACKGROUND

In a Passive Optical Network (PON) system, an Optical Line Terminal (OLT) resides at a Central Office (CO) location and an Optical Network Terminal (ONT) resides at a service subscriber location. These two network elements interoperate to facilitate data transmission between the CO and the service subscriber location. The OLT and the ONT have respective local diagnostic interfaces for providing personnel (i.e., a craftsperson) with local access to diagnostic functionalities. An Element Management System (EMS) is connected to the OLT via a respective interface channel, enabling certain diagnostic functionalities of the OLT and ONT to be facilitated over the PON via the EMS. Examples of such diagnostic functionalities include, but are not limited to, one or more of functionalities relating to system maintenance, functionalities relating to system testing and functionalities relating to system provisioning.

When desired ONT diagnostic functionalities are supported by ONT management and control interface (OMCI), their activation can be facilitated remotely via the resident interface of the OLT or via the Element Management System. However, accessing ONT diagnostic functionalities that are not supported by one or more communications channels, interfaces and/or network elements (e.g., an ONT management and control interface (OMCI)) requires physical connection to the local ONT diagnostic interface (i.e., the local craft interface). Such a situation of non-supported ONT diagnostic functionality means that a craftsperson must travel to the physical location where the ONT is installed to access these diagnostic functionalities.

Accessing ONT diagnostic functionalities locally at an ONT is expensive, potentially dangerous and logistically inefficient. Each truck roll to a service subscriber location represents a significant expense to a telecommunications company. Additionally, access to the ONT may not be possible without physical access to the subscriber's home or business, which can lead to further expense due to wait time and/or return trips.

From EP 0 648 061 A2 an optical network is known comprising a central office that is connected to an optical network unit (ONU). The ONU provides a cross-connect matrix that enables to physically connect and disconnect line circuit to several service subscriber terminals. The cross-connect matrix is remote controlled by issuing a network management command from the central office.

From Paik et al., "Design and implementation of web-based EPON EMS system", XP 010701309, an Ethernet-based optical network element management system is known with remote access via a web-based interface. The known network element management system enables to transmit messages not only from an optical line terminal (OLT) residing in the central office but also from further locations using web-based interfaces.

From Gerry Pesavento "Ethernet passive optical network architecture for broadband access", XP 001162954, a standardized architecture for a broadband access network is known. The architecture comprises standardized diagnostic functionalities for monitoring the health status of the network, comprising standardized OAM protocol data units that are transmitted between an OLT and an OMU.

Therefore, an approach for facilitating access to ONT diagnostic functionalities in a manner that overcomes drawbacks associated with conventional approaches for facilitating access to ONT diagnostic functionalities would be advantageous, useful and novel.

### SUMMARY OF THE DISCLOSURE

The inventive disclosures made herein enable access to ONT diagnostic functionalities to be facilitated in a manner that overcomes shortcomings associated with conventional approaches for accessing ONT diagnostic functionalities. More specifically, embodiments of systems and methods in accordance with the inventive disclosures made herein allow ONT diagnostic functionalities that are not supported by a standard ONT management and control interface protocol (i.e., proprietary diagnostic functionalities) to be accessed not only locally at an ONT, but also remotely via a corresponding OLT or EMS. Accordingly, except for perhaps the most extreme situations (e.g., those required to address ONT/OLT communications at the PON level), embodiments of systems and methods in accordance with the inventive disclosures made herein will eliminate the need to travel to the physical location of the ONT. The advantages of these systems and methods allowing remote access to such non-interface supported ONT diagnostic functionalities include, but are not limited to, reducing expenses associated with truck roll to a service subscriber location, reducing expenses associated with wait time at and/or return trips to the service subscriber location and reducing risk to the craftsperson from situations that may exist at the service subscriber location.

In accordance with one embodiment of the inventive disclosures made herein, an Optical Network Terminal (ONT) for a Passive Optical Network (PON) system comprises a Diagnostic Interface Support Functions (DISF) module and a PON Interface Support Functions (PISF) module connected to the DISF module. The PISF module is configured for receiving a remotely-issued diagnostic request transmitted for reception by the PISF module over a PON connected to the PISF module and for transmitting request reply information over the PON from the PISF module in response to the PISF module receiving the request reply information from the DISF module. The DISF module and the PISF module are jointly configured for enabling the remotely-issued diagnostic request to be communicated from the PISF module to the DISF module and for enabling the request reply information to be communicated from the DISF module to the PISF module.

In accordance with another embodiment of the inventive disclosures made herein, a passive optical network system comprises an Optical Network Terminal (ONT), an Optical Line Terminal (OLT) and a Passive Optical Network (PON) connected between the ONT and the OLT. The ONT and the OLT are jointly configured for enabling a remotely-issued diagnostic request to be communicated from the OLT to the ONT via the PON. The ONT and the OLT are jointly configured for enabling request reply information to be communicated from the ONT to the OLT over the PON. The ONT and the OLT each include a Diagnostic Interface Support Functions (DISF) module and a PON Interface Support Functions (PISF) module. The DISF module of the OLT and the PISF module of the OLT are jointly configured for enabling the remotely-issued diagnostic request to be communicated from the DISF module of the OLT to the PISF module of the OLT and for enabling the request reply information to be communicated from the PISF module of the OLT to the DISF module of the OLT. The DISF module of the ONT and the PISF module of the ONT are jointly configured for enabling the remotely-issued diagnostic request to be communicated from the PISF module of the ONT to the DISF module of the ONT and for enabling the request reply information to be communicated from the DISF module of the ONT to the PISF module of the ONT.

In accordance with one embodiment of the inventive disclosures made herein, a method for facilitating remote access of Optical Network Terminal (ONT) functionalities in a Passive Optical Network (PON) system is provided. The method includes facilitating transmission of an ONT diagnostic functionality request from an Optical Line Terminal (OLT) for reception by an ONT over a PON connected between the ONT and the OLT. In response to receiving the request and recognizing the request as being transmitted from the OLT, implementation of the ONT diagnostic functionality is facilitated for determining a diagnostic result. After facilitating implementation of the ONT diagnostic functionality, transmission of request reply information from the ONT for reception by the OLT is facilitated. The request reply information corresponds to the diagnostic result.

In accordance with one embodiment of the inventive disclosures made herein, a method for facilitating remote access of Optical Network Terminal (ONT) functionalities in a Passive Optical Network (PON) system is provided. The method includes receiving a remotely-issued diagnostic request transmitted for reception by a PON Interface Support Function (PISF) module of an ONT over a PON connected to the PISF, communicating the remotely-issued diagnostic request from the PISF module to a Diagnostic Interface Support Functions (DISF) module of the ONT and communicating request reply information from the DISF module to the PISF module. In response to the PISF module receiving the request reply information from the DISF module, the request reply information is transmitted over the PON from the PISF module.

These and other objects and embodiments of the inventive disclosures made herein will become readily apparent upon further review of the following specification and associated drawings.

### BRIEF DESCRIPTION OF THE DRAWING FIGURES

FIG. 1 depicts an embodiment of a passive optical network system in accordance with an embodiment of the inventive disclosures made herein
FIG. 2 depicts an embodiment of the optical line terminal depicted in FIG. 1.
FIG. 3 depicts an embodiment of the optical network terminal depicted in FIG. 1.
FIGS. 4A through 4C depict a method for facilitating optical network terminal diagnostic functionality in accordance with the invention disclosures made herein.

### DETAILED DESCRIPTION OF THE DRAWING FIGURES

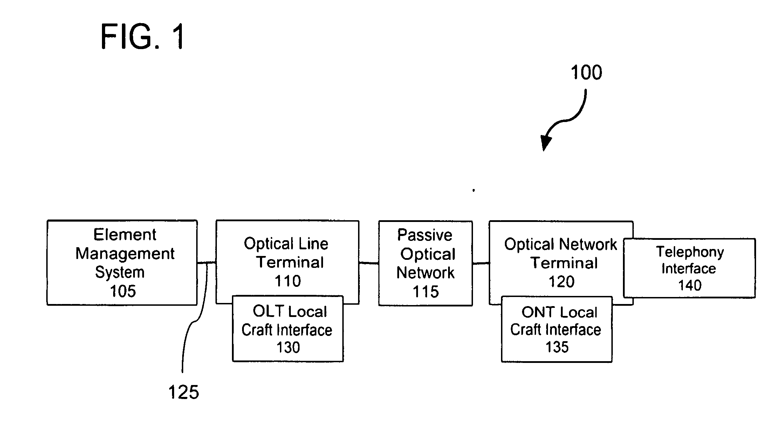

FIG. 1 depicts an embodiment of a Passive Optical Network (PON) system 100 in accordance with an embodiment of the inventive disclosures made herein. From a hardware configuration standpoint, the PON system 100 is preferably, but not necessarily, configured generally according to the configuration of a conventional PON system. However, from a software/methodology standpoint, the PON system 100 is configured for carrying out ONT diagnostic functionality in accordance with the inventive disclosures made herein.

The PON system 100 includes an Element Management System (EMS) 105, an Optical Line Terminal (OLT) 110, a PON 115 and an Optical Network Terminal (ONT) 120. The EMS 105 is connected to the OLT 110 via an Element Management Channel (EMC) 125, thereby enabling communication therebetween. The OLT 110 is connected to the ONT 120 via the PON 115, thereby enabling communication therebetween.

The EMS 105 is configured for providing remote management access to the OLT 110, the PON 115 and the ONT 120. The OLT 110 includes an OLT local craft interface 130 (e.g., a TL1 interface), thereby providing a local interface for a craftsperson. The OLT 110 is configured for facilitating required diagnostic functionalities to provide PON capabilities, for providing an interface with the EMS 105 and for providing remote management access to the EMS 105, the PON 115 and the ONT 120. The PON 115 provides optical connectivity between the OLT 110 and the ONT 120. The ONT 120 is deployed in geographically any one of diverse locations on a service subscriber's property, including within a residence or business building. The ONT 120 includes an ONT local craft interface 135 and a telephony interface 140. The ONT local craft interface 135 provides for a local interface for a craftsperson and the telephony interface 140 provides for connectivity with service subscriber equipment.

In accordance with the inventive disclosures made herein, at least a portion of the diagnostic capabilities accessible at the ONT craft interface 135 is proprietary and not supported (i.e., non supported ONT diagnostic functionality) by PON interface capabilities of the ONT 120. In accordance with the inventive disclosures made herein, the ONT 120 along with the EMS 105 and/or the OLT 110 are configured for enabling a craftsperson to facilitate such non-supported diagnostic functionalities via the EMS 105 and/or the OLT local craft interface 130. To enable access to such non-supported diagnostic functionalities via the EMS 105, the EMS 105 is configured to provide access to the OLT capabilities that enable ONT diagnostic functionality in accordance with the inventive disclosures made herein. In one embodiment, the EMS 105 includes a graphical user interface that provides a craftsperson with the capability to establish a remote session on the ONT for implementing such non-supported diagnostic functionalities and with capability to interact directly with the processor in the ONT to access the hardware and/or software registers that are used by other software in the ONT. As described in greater detail below, the OLT 110 and the ONT 120 are configured for enabling non-supported diagnostic functionality to be carried out in accordance with the inventive disclosures made herein.

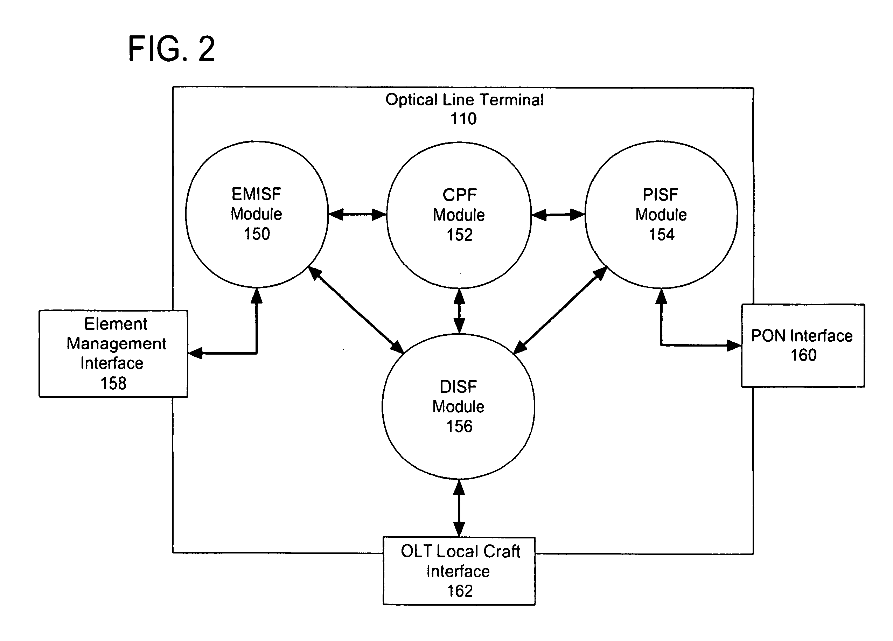

FIG. 2 depicts an embodiment of the OLT 110. The OLT 110 includes an Element Management Interface Support Functions (EMISF) module 150, a Core Processing Functions (CPF) module 152, a PON Interface Support Functions (PISF) module 154 and a Diagnostic Interface Support Functions (DISF) module 156. The EMISF module 150, the CPF module 152, the PISF module 145 and the DISF module 156 (i.e., functional blocks of the OLT 110) are interconnected for enabling interaction therebetween. The EMISF module 150 of the OLT 110 comprises the hardware and/or software that support an element management interface 158 of the OLT 110 for enabling communication of information over the EMC 125 (depicted in FIG. 1). The PISF module 154 of the OLT 110 comprises the hardware and/or software that support a PON interface 160 of the OLT 110 for enabling communication of information over the PON 115 (depicted in FIG. 1). The DISF module 156 of the OLT 110 comprises the hardware and/or software that support the OLT local craft interface 162 of the OLT 110 for enabling communication of information via diagnostic equipment operated by a craftsperson. The CPF module 152 of the OLT 110 comprises the hardware and/or software (e.g., data processing devices power supplies, hardware monitoring functions, etc) that are not directly related to the support of any of the physical interfaces (e.g., the EMS interface 148, the PON interface 160 and the OLT local craft interface 162) supported by the OLT 110.

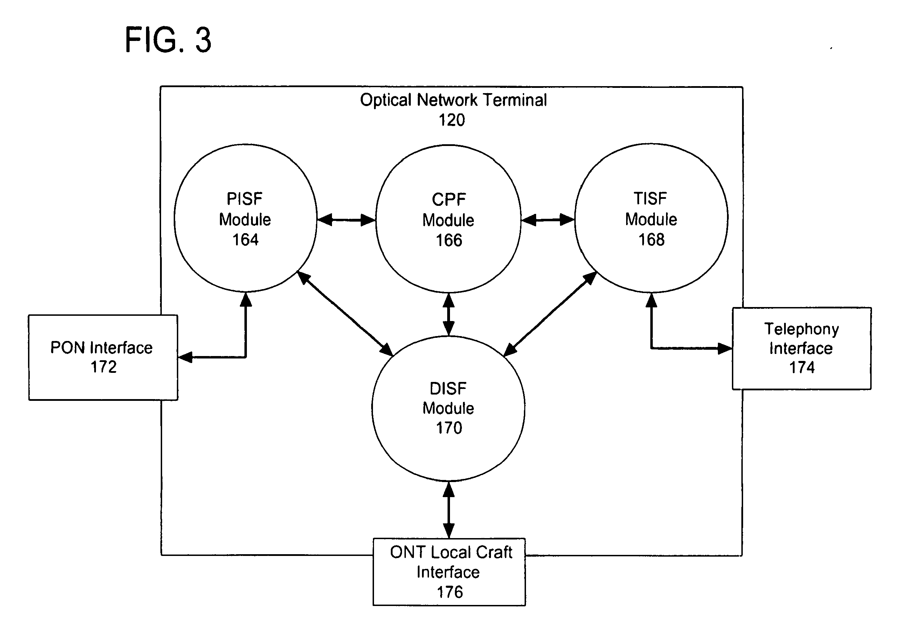

FIG. 3 depicts an embodiment of the ONT 120 of FIG. 1. The ONT 120 includes a PISF module 164, a Core Processing Functions (CPF) module 166, a TISF module 168 and a DISF module 170. The PISF 164, the CPF module 166, the TISF module 168 and the DISF module 170 (i.e., functional blocks of the ONT 120) are interconnected for enabling interaction therebetween. The PISF module 164 of the ONT 120 comprises the hardware and/or software that support a PON interface 172 of the ONT 120 for enabling communication of information over the PON 115 (depicted in FIG. 1). The TISF module 168 of the ONT 120 comprises the hardware and/or software that support a telephony interface 174 of the ONT 120 for enabling communication of information with subscriber equipment via an interface channel at the service subscriber's premises. The DISF module 170 of the ONT 120 comprises the hardware and/or software that support the ONT local craft interface 176 for enabling communication of information via diagnostic equipment operated by a craftsperson. The CPF module 166 of the ONT 120 comprises the hardware and/or software (e.g., data processing devices power supplies, hardware monitoring functions, etc) that are not directly related to the support of any of the physical interfaces (e.g., PON interface 172, the telephony interface 174 and the ONT local raft interface 176) supported by the ONT 120.

Accordingly, an OLT in accordance with the inventive disclosures made herein provides transport functionality for information and an ONT in accordance with the inventive disclosures made herein provides transport functionality, request interpretation functionality and request implementation functionality. Through the functionalities provided by the OLT and the ONT in accordance with the inventive disclosures made herein, a craftsperson is able to diagnose ONT problems remotely (e.g., from the OLT and/or an EMS), even if the OLT and the ONT are build by different companies and do not fully support the respective diagnostic functionality of each other. For example, by utilizing a user-defined message that specifies a desired diagnostic functionality request and that the OLT recognizes and communicates to the ONT, the OLT provides a transport mechanism for message content between the craftsperson and the ONT, thereby enabling the ONT to receive, recognize and interpret requested diagnostic functionality of the user-defined message.

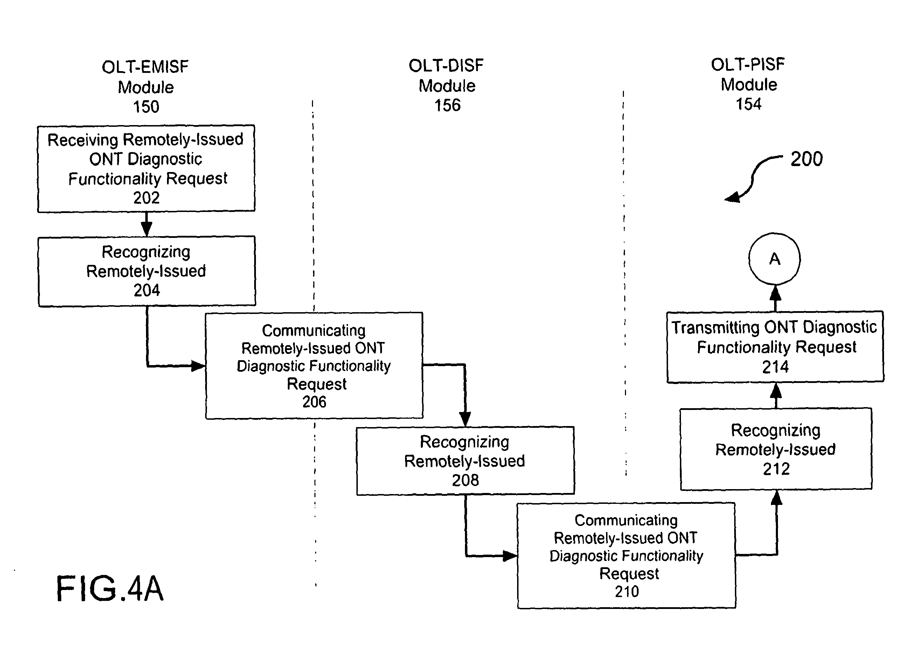

FIGS. 4A through 4C depict a method 200 for facilitating ONT diagnostic functionality in accordance with the invention disclosures made herein. Accordingly, the method 200 is configured for enabling ONT diagnostic functionalities that are not supported by a standard ONT management and control interface protocol (i.e., proprietary diagnostic functionalities) to be accessed locally at an ONT and, advantageously, remotely over a PON via a corresponding OLT or EMS. Accordingly, except for perhaps the most extreme situations (e.g., those required to address ONT/OLT communications at the PON level), the method 200 eliminates the need for a craftsperson to travel to the physical location of the ONT, thereby reducing expenses associated with truck roll to a service subscriber location, reducing expenses associated with wait time at and/or return trips to the service subscriber location and reducing risk to the craftsperson from situations that may exist at the service subscriber location. The PON system 100 and constituent network elements depicted in FIGS. 1 through 3 is an example of hardware configurable (i.e., through software and/or methodology modifications) for carrying out the method 100. For clarity, the operations comprised by the method 200 will be described in combination with the constituent network elements of the PON system 100. However, it will be understood by a skilled person that implementation of the functionality tangibly embodied by the method 100 is not limited to implementation via the PON system 100 and its constituent network elements.

Referring to FIG. 4A, the EMISF module 150 of the OLT 110 performs an operation 202 for receiving a remotely-issued ONT diagnostic functionality request, which is transmitted from the EMS 105 for reception by the OLT 110. In response to receiving remotely-issued ONT diagnostic functionality request, the EMISF module 150 of the OLT 110 performs an operation 204 for recognizing the remotely-issued ONT diagnostic functionality request. Such recognition in the downstream direction (i.e., toward the ONT 120) is disclosed herein to be recognition that the remotely-issued ONT diagnostic functionality request corresponds to non-supported ONT diagnostic functionality and thus must be interpreted, communicated, transmitted, received and/or implemented using methodologies in accordance with the inventive disclosures made herein. For example, in one embodiment, the step of recognizing the remotely-issued ONT diagnostic functionality request includes comparing the remotely-issued ONT diagnostic functionality request against a collection of known requests for non-supported ONT diagnostic functionality.

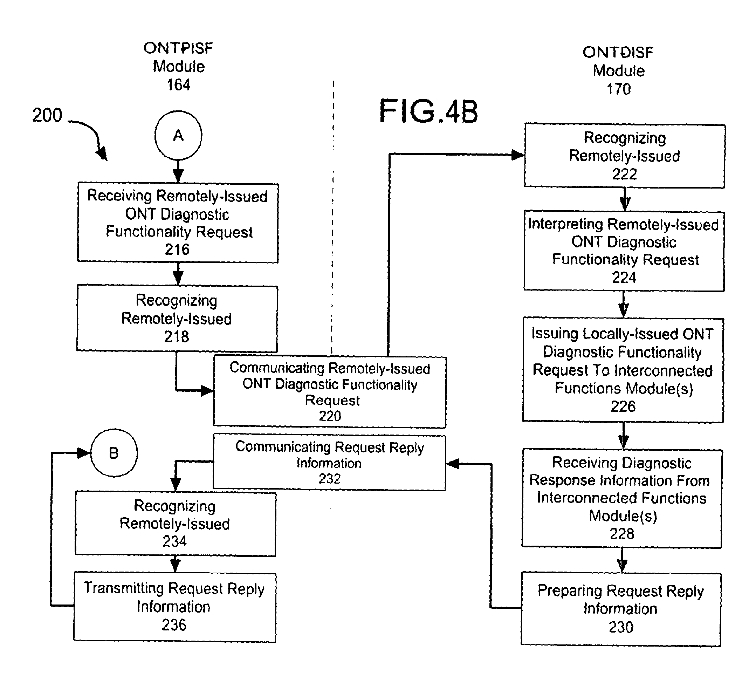

In response to recognizing the remotely-issued ONT diagnostic functionality request as being a request for implementing non-supported ONT diagnostic functionality, the EMISF module 150 of the OLT 110 and the DISF module 156 of the OLT 110 jointly perform an operation 206 for communicating the remotely-issued ONT diagnostic functionality request from the EMISF module 150 of the OLT 110 to the DISF module 156 of the OLT 110- In response to the remotely-issued ONT diagnostic functionality request being communicated to the DISF module 156 of the OLT 110, the DISF module 156 of the OLT 110 performs an operation 208 for recognizing the remotely-issued ONT diagnostic functionality request. In response to recognizing the remotely-issued ONT diagnostic functionality request as being a request for implementing non-supported ONT diagnostic functionality, the DISF module 156 of the OLT 110 and the PISF module 154 of the OLT 110 jointly perform an operation 210 for communicating the remotely-issued ONT diagnostic functionality request from the DISF module 156 of the OLT 110 to the PISF module 154 of the OLT 110. In response to the remotely-issued ONT diagnostic functionality request being communicated to the PISF module 154 of the OLT 110, the PISF module 154 of the OLT 110 performs an operation 212 for recognizing the remotely-issued ONT diagnostic functionality request. In response to recognizing the remotely-issued ONT diagnostic functionality request as being a request for implementing non-supported ONT diagnostic functionality, the PISF module 154 performs an operation 214 for transmitting the remotely-issued ONT diagnostic functionality request from the OLT 110 for reception by the ONT 120 over the PON 115. In one embodiment, transmitting the remotely-issued ONT diagnostic functionality request preferably includes generating one or more command packets corresponding to the requested ONT diagnostic functionality and being configured for transmission over the PON 115.
Referring to FIG. 4B, the PISF module 164 of the ONT 120 performs an operation 216 for receiving the remotely-issued ONT diagnostic functionality request, which was transmitted from the OLT 110 for reception by the ONT 120. In response to receiving the remotely-issued ONT diagnostic functionality request, the PISF module 164 of the ONT 120 performs an operation 218 for recognizing the remotely-issued ONT diagnostic functionality request. In response to recognizing the remotely-issued ONT diagnostic functionality request as being a request for implementing non-supported ONT diagnostic functionality, the PISF module 164 of the ONT 120 and the DISF module 170 of the ONT 120 jointly perform an operation 220 for communicating the remotely-issued ONT diagnostic functionality request from the PISF module 164 of the ONT 120 to the DISF module 170 of the ONT 120. In response to the remotely-issued ONT diagnostic functionality request being communicated to the DISF module 170 of the ONT 120, the DISF module 170 of the ONT 120 performs an operation 222 for recognizing the remotely-issued ONT diagnostic functionality request.

In response to recognizing the remotely-issued ONT diagnostic functionality request as being a request for implementing non-supported ONT diagnostic functionality, the DISF module 170 of the ONT 120 performs an operation 224 for interpreting the remotely-issued ONT diagnostic functionality request for determining specific details regarding the requested ONT diagnostic functionality (e.g., what ONT diagnostic functionality is being requested, under what conditions to perform the requested ONT diagnostic functionality, etc), followed by an operation 226 being performed for issuing an ONT diagnostic functionality request corresponding to the determined specific details (i.e., a locally-issued ONT diagnostic functionality request). The locally-issued ONT diagnostic functionality request is issued by the DISF module 170 for reception by the PISF module 164 of the ONT 120, the CPF module 166 of the ONT 120 and/or the TISF module 168 of the ONT 120, and is interpretable by such modules of the ONT 120.

After issuing the locally-issued ONT diagnostic functionality request and after the modules (164-170) of the ONT 120 act on the Locally-issued ONT diagnostic functionality request, the DISF module 170 performs an operation 228 for receiving diagnostic response information from the PISF module 164 of the ONT 120, the CPF module 166 of the ONT 120 and/or the TISF module 168 of the ONT 120. The diagnostic response information corresponds to a diagnostic result of the requested ONT diagnostic functionality (i.e., information resulting from the requested ONT diagnostic functionality being facilitated). In response to receiving the diagnostic response information, the DISF module 170 performs an operation 230 for preparing request reply information comprising at least a portion of the diagnostic response information. In response to preparing the request reply information, the PISF module 164 and the DISF module 170 jointly perform an operation 232 for communicating the request reply information from the DISF module 170 of the ONT 120 to the PISF module 164 of the ONT 120.

In response to the request reply information being communicated to the PISF module 164 of the ONT 120, the PISF module 164 of the ONT 120 performs an operation 234 for recognizing the request reply information. Such recognition in the upstream direction (i.e., toward the EMS 105) is disclosed herein to be recognition that the request reply information corresponds to non-supported ONT diagnostic functionality and thus must be interpreted, communicated, transmitted and/or received in accordance with the inventive disclosures made herein. For example, in one embodiment, the step of recognizing the request reply information includes determining whether the request reply information comprises particular identifying information, which designates the request reply information as being information associated with a request for implementing non-supported ONT diagnostic functionality. In response to recognizing the request reply information as being information associated with a request for implementing non-supported ONT diagnostic functionality, the PISF module 164 of the ONT 120 performs an operation 236 for transmitting the request reply information from the ONT 110 for reception by the OLT 110 over the PON 115. In one embodiment, transmitting the request reply information preferably includes generating one or more command packets corresponding to the request reply information and being configured for transmission over the PON 115.

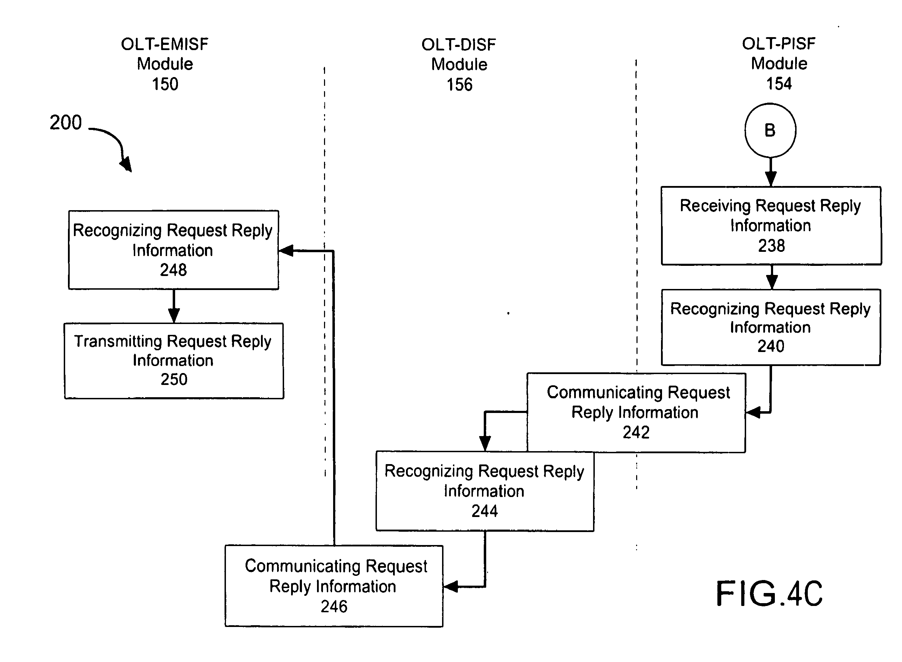

Referring to FIG. 4C, the PISF module 154 of the OLT 110 performs an operation 238 for receiving the request reply information, which was transmitted from the OLT 110 for reception by the ONT 120. In response to receiving the request reply information, the PISF module 154 of the OLT 110 performs an operation 240 for recognizing the remotely-issued ONT diagnostic functionality request. In response to recognizing the request reply information as being information associated with a request for implementing non-supported ONT diagnostic functionality, the PISF module 154 of the OLT 110 and the DISF module 156 of the OLT 110 jointly perform an operation 242 for communicating the request reply information from the PISF module 144 of the OLT 110 to the DISF module 156 of the OLT 110.

In response to the request reply information being communicated to the DISF module 156 of the OLT 120, the DISF module 156 of the OLT 110 performs an operation 244 for recognizing the request reply information. In response to recognizing the request reply information as being information associated with a request for implementing non-supported ONT diagnostic functionality, the DISF module 156 of the OLT 110 and the EMISF module 150 of the OLT 110 jointly perform an operation 246 for communicating the request reply information from the DISF module 156 of the OLT 110 to the EMISF module 150 of the OLT 110. In response to the request reply information being communicated to the EMISF module 150 of the OLT 110, the EMISF module 150 of the OLT 110 performs an operation 248 for recognizing the request reply information, followed by the EMISF module 150 of the OLT 120 performing an operation 250 for transmitting the request reply information for the OLT 110 for reception by the EMS 105.

Alternatively, the remotely-issued ONT diagnostic functionality request may be provided at the OLT local craft interface 162 by a craftsperson rather than being provided from the EMS 105. Similarly, the request reply information may be accessed by a craftsperson via the OLT local craft interface 162 rather than at the EMS 105.

In view of the method 200, a mechanism is provided for enabling a craftsperson to access diagnostic capabilities of the local craft interface 135 of the ONT 120 (i.e., the diagnostic interface of the ONT 120) without being present at the physical location of the ONT 120. This eliminates the need to travel to the physical location of the ONT 120 to do diagnostic tests that would otherwise require physical connectivity to the ONT 120. As depicted in the method 200, implementing such remote access to the diagnostic capabilities of a local craft interface of an ONT requires a number of distinguishing alterations and/or additions to the capabilities of the ONMT and an associated OLT. These alterations and/or additions include, but are not limited to, adding capabilities to the OLT to incorporate ONT diagnostic requests from the remote craftsperson into the information (e.g., data) that is exchanged between the OLT and the ONT over the PON, extending the capabilities to the protocol utilized on the PON to transfer diagnostic interactions between the remote craftsperson and the OLT, extending the capabilities to the protocol utilized on the PON to transfer diagnostic interactions between the remote craftsperson and the ONT, and extending the functionality of the various modules of the OLT and ONT such that requests for diagnostic actions by the remote craftsperson can be processed by the ONT as if they were issued at the local craft interface of the ONT.

Extension of the ONT/OLT interfaces would involve extending the Physical Layer OAM (PLOAM) and/or OMCI protocol utilized in BPON (broadband PON) systems. For GPON (gigabit PON) and EPON (Ethernet-based PON) systems, the corresponding protocol components would require extension. The extension of the PLOAM (or lowest corresponding level in GPON or EPON systems) level of the interface protocol would maximize the diagnostic value of the inventive disclosures made herein because dependencies on high-level functionality would be minimized. Extension of the OMCI, or corresponding protocols in GPON and EPON systems is also possible and, in some instances, would provide a similar level of diagnostic capabilities.

PLOAM is a Layer 2 protocol for exchanging packets of management information between the OLT and ONT. OMCI is the management channel protocol. Implementation of methods and systems in accordance with the inventive disclosures made herein involves either extending the PLOAM transfer mechanism to support the exchange of messages between the processors of an OLT and an ONT, or utilization of the user defined message capability of OMCI to transfer this same information. Utilization of PLOAM is preferred, as this strategy would put the least amount of software between the remote craftsperson and processing device(s) of the ONT. However, Utilization of the PLOAM involves an extension of the associated interface protocol. Using the user-defined messages in OMCI would have a smaller standardization impact but would be less robust because of the involvement of more protocol software between processors of the OLT and ONT. Regardless of the chosen approach, the resulting mechanism must enable exchange of message packets between the ONT and the OLT containing vendor specific (e.g., proprietary) commands and the corresponding response data.

Referring now to computer readable medium, it will be understood from the inventive disclosures made herein that methods, processes and/or operations adapted for carrying out ONT diagnostic functionality as disclosed herein are tangibly embodied by computer readable medium having instructions thereon for carrying out such functionality. In one specific embodiment, the instructions are tangibly embodied for carrying out the method 200 disclosed above in FIGS. 4A though 4C to facilitate requested ONT diagnostic functionality that is proprietary and not supported (i.e., non supported ONT diagnostic functionality) by PON interface capabilities of the ONT. The instructions may be accessible by one or more data processing devices from a memory apparatus (e.g. RAM, ROM, virtual memory, hard drive memory, etc), from an apparatus readable by a drive unit of a data processing system (e.g., a diskette, a compact disk, a tape cartridge, etc) or both. Accordingly, embodiments of computer readable medium in accordance with the inventive disclosures made herein include a compact disk, a hard drive, RAM or other type of storage apparatus that has imaged thereon a computer program (i.e., a set of instructions) adapted for carrying out ONT diagnostic functionality in accordance with the inventive disclosures made herein.

The following features, separately or in any combination, may also constitute advantageous embodiments of the described or claimed invention:
- A passive optical network system, comprising: an Optical Network Terminal (ONT); an Optical Line Terminal (OLT); and a Passive Optical Network (PON) connected between the ONT and the OLT; wherein the ONT and the OLT are jointly configured for enabling a remotely-issued diagnostic request to be communicated from the OLT to the ONT via the PON wherein the ONT and the OLT are jointly configured for enabling request reply information to be communicated from the ONT to the OLT over the PON; wherein the ONT and the OLT each include a Diagnostic Interface Support Functions (DISF) module and a PON Interface Support Functions (PISF) module; wherein the DISF module of the OLT and the PISF module of the OLT are jointly configured for enabling the remotely-issued diagnostic request to be communicated from the DISF module of the OLT to the PISF module of the OLT and for enabling said request reply information to be communicated from the PISF module of the OLT to the DISF module of the OLT; and wherein the DISF module of the ONT and the PISF module of the ONT are jointly configured for enabling the remotely-issued diagnostic request to be communicated from the PISF module of the ONT to the DISF module of the ONT and for enabling said request reply information to be communicated from the DISF module of the ONT to the PISF module of the ONT;
- The claimed and/or described passive optical network system wherein: the ONT includes a Core Processing Functions (CPF) module and a Telephony Interface Support Functions (TISF) module; said modules of the ONT are jointly configured for enabling a locally-issued diagnostic request corresponding to the remotely-issued diagnostic request to be communicated from the DISF module of the ONT to at least one of the CPF module, the PISF module of the ONT and the TISF module in response to the DISF module of the ONT receiving and recognizing the remotely-issued diagnostic request;
- The claimed and/or described passive optical network system wherein: said modules of the ONT are jointly configured for enabling ONT diagnostic functionality corresponding to the remotely-issued diagnostic request to be facilitated and for generating diagnostic response information in response to facilitating said ONT diagnostic functionality; said ONT diagnostic functionality is facilitated in response to the locally-issued diagnostic request being communicated from the DISF module of the ONT to at least one of the CPF module, the PISF module of the ONT and the TISF module; said modules of the ONT are jointly configured for enabling said diagnostic response information to be communicated from at least one of the CPF module, the PISF module of the ONT and the TISF module to the DISF module of the ONT; and said request reply information corresponds to a diagnostic result comprised by said diagnostic response information;
- The claimed and/or described passive optical network system wherein: the DISF module of the OLT is configured for recognizing the remotely-issued diagnostic request as being remotely issued and for communicating the remotely-issued diagnostic request from the DISF module to the PISF module of the OLT in response to the DISF module of the OLT recognizing the remotely-issued diagnostic request; the PISF module of the ONT is configured for recognizing the remotely-issued diagnostic request as being remotely issued and for communicating the remotely-issued diagnostic request from the PISF module to the DISF module of the ONT in response to the PISF module of the ONT recognizing the remotely-issued diagnostic request; and the DISF module of the ONT is configured for recognizing the remotely-issued diagnostic request as being remotely issued and for facilitating ONT functionality corresponding to the remotely-issued diagnostic request after the DISF module of the ONT recognizes the remotely-issued diagnostic request;
- The claimed and/or described passive optical network system wherein: the ONT includes a Core Processing Functions (CPF) module and a Telephony Interface Support Functions (TISF) module; said modules of the ONT are jointly configured for enabling a locally-issued diagnostic request corresponding to the remotely-issued diagnostic request to be communicated from the DISF module of the ONT to at least one of the CPF module, the PISF module of the ONT and the TISF module in response to the DISF module of the ONT receiving and recognizing the remotely-issued diagnostic request;
- The claimed and/or described passive optical network system wherein: said modules of the ONT are jointly configured for enabling ONT diagnostic functionality corresponding to the remotely-issued diagnostic request to be facilitated and for generating diagnostic response information in response to facilitating said ONT diagnostic functionality; said ONT diagnostic functionality is facilitated in response to the locally-issued diagnostic request being communicated from the DISF module of the ONT to at least one of the CPF module, the PISF module of the ONT and the TISF module; said modules of the ONT are jointly configured for enabling said diagnostic response information to be communicated from at least one of the CPF module, the PISF module of the ONT and the TISF module to the DISF module of the ONT; and said request reply information corresponds to a diagnostic result comprised by said diagnostic response information;
- The claimed and/or described passive optical network system wherein: the OLT includes an Element Management Interface Support Functions (EMISF) module; the DISF module of the OLT and the EMISF module are jointly configured for enabling the remotely-issued diagnostic request to be communicated from the EMISF module to the DISF module of the OLT and for enabling said request reply information to be communicated from the DISF module of the OLT to the EMISF module;
- The claimed and/or described method, further comprising:
   communicating a locally-issued diagnostic request corresponding to the remotely-issued diagnostic request from the DISF module to at least one of a Core Processing Functions (CPF) module of the ONT, the PISF module and a Telephony Interface Support Functions (TISF) module of the ONT in response to the DISF module receiving and recognizing the remotely-issued diagnostic request; facilitating said ONT diagnostic functionality corresponding to the remotely-issued diagnostic request in response to the locally-issued diagnostic request being communicated from the DISF module to at least one of the CPF module, the PISF module; and the TISF module; and generating diagnostic response information in response to facilitating said ONT diagnostic functionality;
   communicating said diagnostic response information from at least one of the CPF module, the PISF module and the TISF module to the DISF module, wherein said request reply information corresponds to a diagnostic result comprised by said diagnostic response information.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical and electrical changes may be made. For example, functional blocks shown in the figures could be further combined or divided in any manner. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents.

## Claims

1. An optical Network Terminal "ONT" (120) for a Passive Optical Network "PON" system (100), comprising
a standard ONT (120) management and control interface protocol supporting ONT diagnostic functionalities for remote access via an Element Management System "EMS" (105),
**characterized in that** the ONT (120) provides locally accessible ONT diagnostic functionalities not supported by the EMS (105 and the ONT (120) further comprises
a Diagnostic Interface Support Functions "DISF" module (170) for issuing a locally accessible ONT diagnostic request corresponding to a remotely-issued diagnostic request upon recognizing the remotely-issued ONT diagnostic request not supported by the EMS (105) and for receiving a diagnostic result of the issued locally accessible ONT diagnostic request; and
a PON interface (172) for enabling communication of information over the PON (115) and a PON Interface Support Functions "PISF" module (164) connected to the DISF module (170) for receiving a remotely-issued ONT diagnostic request not supported by the EMS (105) transmitted over the PON (115) to the PON interface (172) and for transmitting request reply information received from the DISF module (170) over the PON (115) using the PON interface (172);
wherein the DISF module (170) and the PISF module (164) are jointly configured for enabling the remotely-issued ONT diagnostic functionality request to be communicated from the PISF module (164) to the DISF module (170) and for enabling said request reply information to be communicated from the DISF module (170) to the PISF module (164).

2. The Optical Network Terminal of claim 1,
further comprising a Core Processing Functions "CPF" module (166) and a Telephony Interface Support Functions "TISF" module (168), wherein said modules are jointly configured for enabling a locally-issued diagnostic request to be communicated from the DISF module (170) to at least one of the CPF module (166), the PISF module (164) and the TISF module (168) in response to the DISF module (170) receiving the remotely-issued diagnostic request.

3. The Optical Network Terminal of claim 2,
wherein said modules are configured for enabling ONT diagnostic functionality corresponding to the remotely-issued diagnostic functionality request to be facilitated and for generating diagnostic response information in response to facilitating said ONT diagnostic functionality;
said ONT diagnostic functionality is facilitated in response to the locally-issued diagnostic request being communicated from the DISF module (170) to at least one of the CPF module (166), the PISF module (164); and the TISF module (168);
said modules are jointly configured for enabling said diagnostic response information to be communicated from at least one of the CPF module (166), the PISF module (164) and the TISF module (168) to the DISF module (170); and
said request reply information corresponds to a diagnostic result comprised by said diagnostic response information.

4. The Optical Network Terminal of claim 1,
wherein the PISF module (164) is configured for recognizing the remotely-issued diagnostic request as being remotely issued and for communicating the remotely-issued diagnostic request from the PISF module (164) to the DISF module (170) in response to the PISF module (164) recognizing the remotely-issued diagnostic request; and
the DISF module (170) is configured for recognizing the remotely-issued diagnostic request as being remotely issued and for facilitating ONT diagnostic functionality corresponding to the remotely-issued diagnostic request after the DISF module (170) recognizes the remotely-issued diagnostic request.

5. The Optical Network Terminal of claim 4,
further comprising a Core Processing Functions "CPF" module and a Telephony Interface Support Functions "TISF" module, wherein said modules are jointly configured for enabling a locally-issued diagnostic request corresponding to the remotely-issued diagnostic request to be communicated from the DISF module (170) to at least one of the CPF module (166), the PISF module (164) and the TISF module (168) in response to the DISF module (170) receiving and recognizing the remotely-issued diagnostic request.

6. The Optical Network Terminal of claim 5,
wherein said modules are configured for enabling ONT diagnostic functionality corresponding to the remotely-issued diagnostic request to be facilitated and for generating diagnostic response information in response to facilitating said ONT diagnostic functionality;
said ONT diagnostic functionality is facilitated in response to the locally-issued diagnostic request being communicated from the DISF module (170) to at least one of the CPF module (166), the PISF module (164), and the TISF module (168);
said modules are jointly configured for enabling said diagnostic response information to be communicated from at least one of the CPF module (166), the PISF module (164) and the TISF module (168) to the DISF module (170); and
said request reply information corresponds to a diagnostic result comprised by said diagnostic response information.

7. A method for facilitating remote access of Optical Network Terminal functionalities in a Passive Optical Network "PON" system (100), wherein a remotely Network Terminal "ONT" (120) comprising a standard ONT (120) management and control interface protocol supporting ONT diagnostic functionalities for remote access via an EMS (105),
**characterized in that**
the diagnostic request is received by a PON Interface Support Function "PISF" module of the ONT (120), wherein the diagnostic request refers to locally accessible ONT diagnostic functionalities not supported by the EMS (105);
the remotely-issued diagnostic request is communicated from the PISF module (164) to a Diagnostic Interface Support Functions "DISF" module of the ONT (120);
a locally accessible ONT diagnostic functionality request corresponding to the remotely-issued diagnostic request is issued upon recognizing that the remotely-issued ONT diagnostic functionality request is not supported by the EMS (105);
a diagnostic result of the issued locally accessible ONT diagnostic functionality is received by the DISF module (170) ;
a request reply information corresponding to the diagnostic result is communicated from the DISF module (170) to the PISF module (164); and
said request reply information is transmitted over the PON from the PISF module (164).

8. The method of claim 7, further comprising
communicating the locally-issued diagnostic request from the DISF module (170) to at least one of a Core Processing Functions "CPF" module of the ONT (120), the PISF module (164) and a Telephony Interface Support Functions "TISF" module of the ONT (120) in response to the DISF module (170) receiving the remotely-issued diagnostic request.

9. The method of claim 8, further comprising
facilitating ONT diagnostic functionality corresponding to the remotely-issued diagnostic request in response to the locally-issued diagnostic request being communicated from the DISF module (170) to at least one of the CPF module (166), the PISF module (164); and the TISF module (168);
generating diagnostic response information in response to facilitating said ONT diagnostic functionality; and
communicating said diagnostic response information from at least one of the CPF module (166), the PISF module (164) and the TISF module (168) to the DISF module (170), wherein said request reply information corresponds to a diagnostic result comprised by said diagnostic response information.

10. The method of claim 7, further comprising
recognizing the remotely-issued diagnostic request as being remotely issued by the PISF module (164);
communicating the remotely-issued diagnostic request from the PISF module (164) to the DISF module (170) in response to recognizing the remotely-issued diagnostic request;
facilitating ONT diagnostic functionality corresponding to the remotely-issued diagnostic request after the DISF module (170) recognizes the remotely-issued diagnostic request; and
communicating said diagnostic response information from at least one of the CPF module (166), the PISF module (164) and the TISF module (168) to the DISF module (170), wherein said request reply information corresponds to a diagnostic result comprised by said diagnostic response information.

## Patentansprüche

1. Optisches Netzwerkendgerät "ONT" (120) für ein passives optisches Netzwerk-, "PON"-System (100), umfassend:
Ein Standard-ONT- (120) Verwaltungs- und Steuerungsschnittstellenprotokoll, welches ONT-Diagnosefunktionalitäten für den Fernzugang über ein Elementverwaltungssystem "EMS" (105) unterstützt,
**dadurch gekennzeichnet, dass** das ONT (120) lokal zugängliche ONT-Diagnosefunktionalitäten bereitstellt, die nicht von dem EMS (105) unterstützt werden, und dass das ONT (120) weiterhin umfasst:
Ein Diagnoseschnittstellenunterstützungsfunktions-, "DISF"-Modul (170) zum Ausgeben einer lokal zugänglichen ONT-Diagnoseanforderung, welche einer fern ausgegebenen Diagnoseanforderung entspricht, nachdem die fern ausgegebene ONT-Diagnoseanforderung, die nicht von dem EMS (105) unterstützt wird, erkannt wurde, und zum Empfangen eines Diagnoseergebnisses der ausgegebenen lokal zugänglichen ONT-Diagnoseanforderung; und
eine PON-Schnittstelle (172), welche die Übermittlung von Informationen über das PON (115) ermöglicht, und ein PON-Schnittstellenunterstützungsfunktions-, "PISF"-Modul (164), welches mit dem DISF-Modul (170) verbunden ist, für den Empfang einer über das PON (115) an die PON-Schnittstelle (172) übertragenen fern ausgegebenen ONT-Diagnoseanforderung, welche nicht von dem EMS (105) unterstützt wird, und für die Übertragung von von dem DISF-Modul (170) über das PON (115) unter Verwendung der PON-Schnittstelle (172) empfangenen Anforderungsantwortinformationen (172);
wobei das DISF-Modul (170) und das PISF-Modul (164) gemeinsam dafür konfiguriert sind, die Übermittlung der fern ausgegebenen ONT-Diagnosefunktionalitätsanforderung von dem PISF-Modul (164) an das DISF-Modul (170) und die Übermittlung der besagten Anforderungsantwortinformationen von dem DISF-Modul (170) an das PISF-Modul (164) zu ermöglichen.

2. Optisches Netzwerkendgerät nach Anspruch 1,
weiterhin umfassend ein Kernverarbeitungsfunktions-, "CPF"-Modul (166) und ein Telefonieschnittstellenunterstützungsfunktions-, "TISF"-Modul (168), wobei die besagten Module gemeinsam dafür konfiguriert sind, die Übermittlung einer lokal ausgegebenen Diagnoseanforderung von dem DISF-Modul (170) an mindestens entweder das CPF-Modul (166), das PISF-Modul (164) oder das TISF-Modul (168) in Reaktion auf den Empfang der fern ausgegebenen Diagnoseanforderung an dem DISF-Modul (170) zu ermöglichen.

3. Optisches Netzwerkendgerät nach Anspruch 2,
wobei die besagten Module dafür konfiguriert sind, die Bereitstellung einer ONT-Diagnosefunktionalität, welche der fern ausgegebenen Diagnosefunktionalitätsanforderung entspricht, und die Erzeugung von Diagnoseantwortinformationen in Reaktion auf die Bereitstellung der besagten ONT-Diagnosefunktionalität zu ermöglichen;
die besagte ONT-Diagnosefunktionalität in Reaktion auf die von dem DISF-Modul (170) an mindestens entweder das CPF-Modul (166), das PISF-Modul (164) oder das TISF-Modul (168) übermittelte lokal ausgegebene Diagnoseanforderung bereitgestellt wird;
die besagten Module gemeinsam dafür konfiguriert sind, die Übermittlung der besagten Diagnoseantwortinformationen von mindestens entweder dem CPF-Modul (166), dem PISF-Modul (164) und dem TISF-Modul (168) an das DISF-Modul (170) zu ermöglichen; und
die besagten Anforderungsantwortinformationen einem in den besagten Diagnoseantwortinformationen enthaltenen Diagnoseergebnis entsprechen.

4. Optisches Netzwerkendgerät nach Anspruch 1,
wobei das PISF-Modul (164) für das Erkennen, dass die fern ausgegebene Diagnoseanforderung fern ausgegeben wurde, und für die Übermittlung der fern ausgegebenen Diagnoseanforderung von dem PISF-Modul (164) an das DISF-Modul (170) in Reaktion auf das Erkennen, durch das PISF-Modul (164), der fern ausgegebenen Diagnoseanforderung konfiguriert ist; und
das DISF-Modul (170) für das Erkennen, dass die fern ausgegebene Diagnoseanforderung fern ausgegeben wurde, und für die Bereitstellung einer ONT-Diagnosefunktionalität, welcher der fern ausgegebenen Diagnoseanforderung entspricht, nachdem das DISF-Modul (170) die fern ausgegebene Diagnoseanforderung erkannt hat, konfiguriert ist.

5. Optisches Netzwerkendgerät nach Anspruch 4,
weiterhin umfassend ein Kernverarbeitungsfunktions-, "CPF"-Modul und ein Telefonieschnittstellenunterstützungsfunktions-, "TISF"-Modul, wobei die besagten Module gemeinsam dafür konfiguriert sind, die Übermittlung einer lokal ausgegebenen Diagnoseanforderung, welche der fern ausgegebenen Diagnoseanforderung entspricht, von dem DISF-Modul (170) an mindestens entweder das CPF-Modul (166), das PISF-Modul (164) oder das TISF-Modul (168) in Reaktion darauf, dass das DISF-Modul (170) die fern ausgegebene Diagnoseanforderung empfangen und erkannt hat, zu ermöglichen.

6. Optisches Netzwerkendgerät nach Anspruch 5,
wobei die besagten Module dafür konfiguriert sind, die Bereitstellung einer ONT-Diagnosefunktionalität, welche der fern ausgegebenen Diagnoseanforderung entspricht, und die Erzeugung von Diagnoseantwortinformationen in Reaktion auf die Bereitstellung der besagten ONT-Diagnosefunktionalität zu ermöglichen;
die besagte ONT-Diagnosefunktionalität in Reaktion auf die von dem DISF-Modul (170) an mindestens entweder das CPF-Modul (166), das PISF-Modul (164) oder das TISF-Modul (158) übermittelte lokal ausgegebenen Diagnoseanforderung bereitgestellt wird;
die besagten Module gemeinsam dafür konfiguriert sind, die Übermittlung der besagten Diagnoseantwortinformationen von mindestens entweder dem CPF-Modul (166), dem PISF-Modul (164) und dem TISF-Modul (168) an das DISF-Modul (170) zu ermöglichen; und
die besagten Anforderungsantwortinformationen einem in den besagten Diagnoseantwortinformationen enthaltenen Diagnoseergebnis entsprechen.

7. Verfahren zum Bereitstellen des Fernzugangs zu Funktionalitäten eines optischen Netzwerkendgeräts in einem passiven optischen Netzwerk-, "PON"-System (100), wobei das fern zugängliche Netzwerkendgerät "ONT" (120) ein Standard-ONT- (120) Verwaltungs- und Steuerungsschnittstellenprotokoll, welches ONT-Diagnosefunktionalitäten für den Fernzugang über ein EMS (105) unterstützt, umfasst, **dadurch gekennzeichnet, dass**
die Diagnoseanforderung an einem PON-Schnittstellenunterstützungsfunktions-, "PISF"-Modul des ONT (120) empfangen wird, wobei sich die Diagnoseanforderung auf lokal zugängliche ONT-Diagnosefunktionalitäten, welche nicht von dem EMS (105) unterstützt werden, bezieht;
die fern ausgegebene Diagnoseanforderung von dem PISF-Modul (164) an ein Diagnoseschnittstellenunterstützungsfunktions-, "DISF"-Modul des ONT (120) übermittelt wird;
eine lokal zugängliche ONT-Diagnosefunktionalitätsanforderung, welche der fern ausgegebenen Diagnoseanforderung entspricht, nach dem Erkennen, dass die fern ausgegebene ONT-Diagnosefunktionalitätsanforderung nicht von dem EMS (105) unterstützt wird, ausgegeben wird;
ein Diagnoseergebnis der ausgegebenen lokal zugänglichen ONT-Diagnosefunktionalität an dem DISF-Modul (170) empfangen wird;
Anforderungsantwortinformationen, welche dem Diagnoseergebnis entsprechen, von dem DISF-Modul (170) an das PISF-Modul (164) übermittelt werden; und
die besagten Anforderungsantwortinformationen von dem PISF-Modul (164) über das PON übertragen werden.

8. Verfahren nach Anspruch 7, weiterhin umfassend:
Übermitteln der lokal ausgegebenen Diagnoseanforderung von dem DISF-Modul (170) an mindestens entweder ein Kernverarbeitungsfunktions-, "CPF"-Modul des ONT (120), das PISF-Modul (164) oder ein Telefonieschnittstellenunterstützungsfunktions-, "TISF"-Modul des ONT (120) in Reaktion darauf, dass das DISF-Modul (170) die fern ausgegebene Diagnoseanforderung empfangen hat.

9. Verfahren nach Anspruch 8, weiterhin umfassend:
Bereitstellen der ONT-Diagnosefunktionalität, welcher der fern ausgegebenen Diagnoseanforderung entspricht, in Reaktion auf die Übermittlung der lokal ausgegebenen Diagnoseanforderung von dem DISF-Modul (170) an mindestens entweder das CPF-Modul (166), das PISF-Modul (164) oder das TISF-Modul (168);
Erzeugen von Diagnoseantwortinformationen in Reaktion auf die Bereitstellung der besagten ONT-Diagnosefunktionalität; und
Übermitteln der besagten Diagnoseantwortinformationen von mindestens entweder dem CPF-Modul (166), dem PISF-Modul (164) oder dem TISF-Modul (168) an das DISF-Modul (170), wobei die besagte Anforderungsantwortinformationen einem in den besagten Diagnoseantwortinformationen enthaltenen Diagnoseergebnis entspricht.

10. Verfahren nach Anspruch 7, weiterhin umfassend:
Erkennen, dass die fern ausgegebene Diagnoseanforderung fern ausgegeben wurde, durch das PISF-Modul (164);
Übermitteln der fern ausgegebenen Diagnoseanforderung von dem PISF-Modul (164) an das DISF-Modul (170) in Reaktion auf das Erkennen der fern ausgegebenen Diagnoseanforderung;
Bereitstellen der ONT-Diagnosefunktionalität, welche der fern ausgegebenen Diagnoseanforderung entspricht, nachdem das DISF-Modul (170) die fern ausgegebene Diagnoseanforderung erkannt hat; und
Übermitteln der besagten Diagnoseantwortinformationen von mindestens entweder dem CPF-Modul (166), dem PISF-Modul (164) oder dem TISF-Modul (168) an das DISF-Modul (170), wobei die besagte Anforderungsantwortinformationen einem in den besagten Diagnoseantwortinformationen enthaltenen Diagnoseergebnis entspricht.

## Revendications

1. Terminal de réseau optique « ONT » (120) pour un système de réseau optique passif « PON » (100), comprenant
un protocole d'interface de gestion et de commande d'ONT (120) standard prenant en charge des fonctionnalités de diagnostic d'ONT pour un accès à distance par l'intermédiaire d'un système de gestion d'éléments « EMS » (105),
**caractérisé en ce que** l'ONT (120) fournit des fonctionnalités de diagnostic d'ONT accessibles localement non prises en charge par l'EMS (105), et l'ONT (120) comprend en outre
un module de fonctions de support d'interface de diagnostic « DISF » (170) pour envoyer une demande de diagnostic d'ONT accessible localement correspondant à une demande de diagnostic envoyée à distance lors de la reconnaissance de la demande de diagnostic d'ONT envoyée à distance non prise en charge par l'EMS (105), et pour recevoir un résultat de diagnostic de la demande envoyée de diagnostic d'ONT accessible localement ; et
une interface PON (172) pour permettre la communication d'informations par l'intermédiaire du PON (115) et un module de fonctions de support d'interface de PON « PISF » (164) connecté au module DISF (170) pour recevoir une demande de diagnostic d'ONT envoyée à distance non prise en charge par l'EMS (105) transmise par l'intermédiaire du PON (115) à l'interface PON (172), et pour transmettre des informations de réponse à la demande provenant du module DISF (170) par l'intermédiaire du PON (115) en utilisant l'interface PON (172) ;
dans lequel le module DISF (170) et le module PISF (164) sont conjointement configurés pour permettre à la demande de fonctionnalités de diagnostic d'ONT envoyée à distance d'être communiquée depuis le module PISF (164) vers le module DISF (170) et pour permettre auxdites informations de réponse à la demande d'être communiquées depuis le module DISF (170) vers le module PISF (164).

2. Terminal de réseau optique selon la revendication 1,
comprenant en outre un module de fonctions centrales de traitement « CPF » (166) et un module de fonctions de support d'interface de téléphonie « TISF » (168), dans lequel lesdits modules sont conjointement configurés pour permettre à une demande de diagnostic envoyée localement d'être communiquée depuis le module DISF (170) vers au moins un module parmi le module CPF (166), le module PISF (164) et le module TISF (168) en réponse à la réception par le module DISF (170) de la demande de diagnostic envoyée à distance.

3. Terminal de réseau optique selon la revendication 2,
dans lequel lesdits modules sont configurés pour permettre à la fonctionnalité de diagnostic d'ONT correspondant à la demande de fonctionnalités de diagnostic envoyée à distance d'être facilitée et pour générer des informations de réponse de diagnostic en réponse à la facilitation de ladite fonctionnalité de diagnostic d'ONT ;
ladite fonctionnalité de diagnostic d'ONT est facilitée en réponse à la communication de la demande de diagnostic envoyée localement depuis le module DISF (170) vers au moins un module parmi le module CPF (166), le module PISF (164) ; et le module TISF (168) ;
lesdits modules sont conjointement configurés pour permettre auxdites informations de réponse de diagnostic d'être communiquées depuis au moins un module parmi le module CPF (166), le module PISF (164) et le module TISF (168) vers le module DISF (170) ; et
lesdites informations de réponse à la demande correspondent à un résultat de diagnostic constitué desdites informations de réponse de diagnostic.

4. Terminal de réseau optique selon la revendication 1,
dans lequel le module PISF (164) est configuré pour reconnaître la demande de diagnostic envoyée à distance comme étant envoyée à distance et pour communiquer la demande de diagnostic envoyée à distance depuis le module PISF (164) vers le module DISF (170) en réponse à la reconnaissance par le module PISF (164) de la demande de diagnostic envoyée à distance ; et
le module DISF (170) est configuré pour reconnaître la demande de diagnostic envoyée à distance comme étant envoyée à distance et pour faciliter la fonctionnalité de diagnostic d'ONT correspondant à la demande de diagnostic envoyée à distance après que le module DISF (170) reconnaît la demande de diagnostic envoyée à distance.

5. Terminal de réseau optique selon la revendication 4,
comprenant en outre un module de fonctions centrales de traitement « CPF » et un module de fonctions de support d'interface de téléphonie « TISF », dans lequel lesdits modules sont conjointement configurés pour permettre à une demande de diagnostic envoyée localement correspondant à la demande de diagnostic envoyée à distance d'être communiquée depuis le module DISF (170) vers au moins un module parmi le module CPF (166), le module PISF (164) et le module TISF (168) en réponse à la réception et à la reconnaissance par le module DISF (170) de la demande de diagnostic envoyée à distance.

6. Terminal de réseau optique selon la revendication 5,
dans lequel lesdits modules sont configurés pour permettre à la fonctionnalité de diagnostic d'ONT correspondant à la demande de diagnostic envoyée à distance d'être facilitée et pour générer des informations de réponse de diagnostic en réponse à la facilitation de ladite fonctionnalité de diagnostic d'ONT ;
ladite fonctionnalité de diagnostic d'ONT est facilitée en réponse à la demande de diagnostic envoyée localement communiquée depuis le module DISF (170) vers au moins un module parmi le module CPF (166), le module PISF (164) et le module TISF (168) ;
lesdits modules sont conjointement configurés pour permettre auxdites informations de réponse de diagnostic d'être communiquées depuis au moins un module parmi le module CPF (166), le module PISF (164) et le module TISF (168) vers le module DISF (170) ; et
lesdites informations de réponse à la demande correspondent à un résultat de diagnostic constitué desdites informations de réponse de diagnostic.

7. Procédé pour faciliter l'accès à distance de fonctionnalités de terminal de réseau optique dans un système de réseau optique passif « PON » (100), dans lequel un « ONT » (120) de terminal de réseau à distance comprend un protocole d'interface de gestion et de commande d'ONT (120) standard prenant en charge des fonctionnalités de diagnostic d'ONT pour un accès à distance par l'intermédiaire d'un EMS (105),
**caractérisé en ce que**
la demande de diagnostic est reçue par un module de fonctions de support d'interface de PON « PISF » de l'ONT (120), dans lequel la demande de diagnostic désigne des fonctionnalités de diagnostic d'ONT accessibles localement non prises en charge par l'EMS (105) ;
la demande de diagnostic envoyée à distance est communiquée depuis le module PISF (164) vers un module de fonctions de support d'interface de diagnostic « DISF » de l'ONT (120) ;
une demande de fonctionnalités de diagnostic d'ONT accessible localement correspondant à la demande de diagnostic envoyée à distance est envoyée lorsqu'il est reconnu que la demande de fonctionnalités de diagnostic d'ONT envoyée à distance n'est pas prise en charge par l'EMS (105) ;
un résultat de diagnostic de la fonctionnalité de diagnostic d'ONT accessible localement envoyée est reçu par le module DISF (170) ;
des informations de réponse à la demande correspondant au résultat de diagnostic sont communiquées depuis le module DISF (170) vers le module PISF (164) ; et
lesdites informations de réponse à la demande sont transmises par l'intermédiaire du PON depuis le module PISF (164).

8. Procédé selon la revendication 7, comprenant en outre l'étape suivante
communiquer la demande de diagnostic envoyée localement depuis le module DISF (170) vers au moins un module parmi un module de fonctions centrales de traitement « CPF » de l'ONT (120), le module PISF (164) et un module de fonctions de support d'interface de téléphonie « TISF » de l'ONT (120) en réponse à la réception par le module DISF (170) de la demande de diagnostic envoyée à distance.

9. Procédé selon la revendication 8, comprenant en outre les étapes suivantes
faciliter une fonctionnalité de diagnostic d'ONT correspondant à la demande de diagnostic envoyée à distance en réponse à la communication de la demande de diagnostic envoyée localement depuis le module DISF (170) vers au moins un module parmi le module CPF (166), le module PISF (164) ; et le module TISF (168) ;
générer des informations de réponse de diagnostic en réponse à la facilitation de ladite fonctionnalité de diagnostic d'ONT ; et
communiquer lesdites informations de réponse de diagnostic depuis au moins un module parmi le module CPF (166), le module PISF (164) et le module TISF (168) au module DISF (170), dans lequel lesdites informations de réponse à la demande correspondent à un résultat de diagnostic constitué desdites informations de réponse de diagnostic.

10. Procédé selon la revendication 7, comprenant en outre les étapes suivantes
reconnaître la demande de diagnostic envoyée à distance comme étant envoyée à distance par le module PISF (164) ;
communiquer la demande de diagnostic envoyée à distance depuis le module PISF (164) vers le module DISF (170) en réponse à la reconnaissance de la demande de diagnostic envoyée à distance :
faciliter une fonctionnalité de diagnostic d'ONT correspondant à la demande de diagnostic envoyée à distance après que le module DISF (170) reconnaît la demande de diagnostic envoyée à distance ; et
communiquer lesdites informations de réponse de diagnostic depuis au moins un module parmi le module CPF (166), le module PISF (164) et le module TISF (168) au module DISF (170), dans lequel lesdites informations de réponse à la demande correspondent à un résultat de diagnostic constitué desdites informations de réponse de diagnostic.
